# EUROPEAN PATENT APPLICATION

(11) **EP 1 736 912 A2**
(43) Date of publication of application: **27.12.2006**
(21) Application number: 06012679.4
(22) Date of filing: 20.06.2006
(51) Int. Cl.: G06K 9/00

(54) **Program search support system**

(30) Priority: 20.06.2005 JP 2005179437
(71) Applicant: Funai Electric Co., Ltd., Daito-shi Osaka 574-0013 (JP)
(72) Inventor: Osaki, Mitsuharu, Daito-shi Osaka 574-0013 (JP)
(74) Representative: Beetz & Partner

(57) **Abstract**

A terminal apparatus 1 displays a still image when a person the user desires to search appears during reproduction so that the face of the person to be searched is selected from the still image. Feature point data is acquired which is composed of a contour, eye position, and the like of the selected face. Broadcasting date and time of a video under reproduction is acquired based on elapsed time of reproduction and recording start date and time. Then, broadcasting date and time, a channel frequency, and feature point data of a video targeted for search is transmitted to a server 27. The server 27 has previously stored feature data of entertainers, and searches for an entertainer corresponding to information transmitted from the terminal apparatus 1. If an answer indicating search end is provided from the server 27 and also there is a person corresponding to the feature point data, the terminal apparatus 1 displays an entertainer name on a screen. The entertainer name displayed on the screen permits search of a program in which the entertainer is in to thereby perform recording programming and the like. If there is no corresponding person, for example, a message "Search again at a later date" or the like, is displayed on the screen.

## Description

### BACKGROUND OF THE INVENTION

### Field of the Invention

The present invention relates to a program search support system including a terminal apparatus capable of recording and reproducing information and a server capable of providing program information.

### Description of the Prior Art

In recent years, due to digital technology development, broadcasting using digital signal has been realized and widely practiced in the field of television broadcasting. In the digital broadcasting, by using digital compression technology, such as MPEG2 or the like, a plurality of channels are allocated to one frequency band previously defined. This permits an increase in the number of programs and thus an increase in program choices, which is favorable for the viewer.

On the contrary, the volume of program information has become huge in the digital broadcasting, making it difficult to obtain sufficient program information from a program table indicated on printed matter such as a newspaper, a magazine, or the like. Thus, a typical digital broadcasting receiving apparatus is provided with a function of an electronic program guide called an EPG.

The viewer can use the EPG to make program selection, program recording programming, and the like on the TV screen. For example, inputting a program-related keyword, such as a program genre, a cast member, or the like of each program with a remote controller or the like permits the viewer to search and view his or her desired program.

Furthermore, a program search support system is known in which a terminal apparatus capable of recording and reproducing information and a server capable of providing program information are connected together via the Internet. As the terminal apparatus, for example, a DVD recorder or the like is used. In this program search support system, upon request from the DVD recorder on the user side to the server for search of program information, the program information is supplied to the DVD recorder.

In such a conventional program search support system, for the user to obtain program information, for example, the DVD recorder is operated by a remote controller to search a desired program, upon which the name of a cast member, broadcasting start date and time, a channel frequency and the like are transmitted to the server. Then, the server is searched for the desired program and then recording (video recording) programming or the like is performed on the DVD recorder.

For example, a program search support system disclosed in JP-A-2005-102109 transmits the next broadcasting schedule, a cast member, a title, a genre, and the like a server for a program to be searched. A program search support system disclosed in JP-A-2004-222030 transmits a cast member, a staff name, and the like to a server for a program to be searched. A program search support system disclosed in JP-A-2003-122788 transmits a genre, a cast member, and the like of a program to a server for the program to be searched.

However, with the conventional program search support system described above, in a case where the user forgets and thus cannot remember the name of a cast (entertainer) of a program to be searched, the desired program cannot be searched, thus raising a problem of poor user-friendliness encountered with the program search support system.

### SUMMARY OF THE INVENTION

The present invention has been mane to achieve the object described above, and it is an object of the invention to provide a program search support system capable of providing better user-friendliness.

To achieve the object described above, a program search support system according to one aspect of the invention includes: a terminal apparatus (1) capable of recording and reproducing information; and a server (27) connected to the terminal apparatus (1) via a communication line (26) and capable of providing program information. By providing, from the terminal apparatus (1) to the server (27), a request for search for program information, the program information is acquired by the terminal apparatus (1). The terminal apparatus (1) transmits to the server (27) feature point data of a person selected from a still image displayed on a screen, broadcasting date and time of a video under reproduction; and a channel frequency of the video under reproduction. The server (27) searches for a person based on information received from the terminal apparatus (1). The terminal apparatus (1) displays an entertainer name on the screen if there is a corresponding person as a result of the search by the server (27).

According to this configuration, the terminal apparatus (1) records a program onto the recording medium (25), upon which information for acquiring the channel frequency of the program and the broadcasting date and time of the program, such as recording start date and time and the like, is simultaneously recorded onto the recording medium. Through the user's selection of a person from a still image displayed on the screen during reproduction from the recorded program causes the terminal apparatus (1) to obtain feature point data of the contour, eye position, or the like of the face of the person. Moreover, the terminal apparatus (1) acquires the broadcasting date and time and the channel frequency from the recording medium (25), and transmits to the server (27) the feature point data, the broadcasting date and time, and the channel frequency. The server (27) searches previously stored information of persons for a corresponding person based on the information received from the terminal apparatus (1). If there is a corresponding person as a result of the search by the server (27), the terminal apparatus (1) displays the corresponding entertainer name on the screen.

In the program search support system configured as described above, the terminal apparatus (1) has: a program-related information recording part which, when a program has been recorded, records recording start time and a channel frequency onto a recording medium (25); a feature point data acquisition part which acquires feature point data of a face of a person selected from a still image displayed on a screen; a broadcasting date and time acquisition part which acquires broadcasting date and time of a video under reproduction based on elapsed time of reproduction and the recording start date and time; a transmission part which transmits to the server (27) the broadcasting date and time acquired by the broadcasting date and time acquisition part, the feature point data obtained by the feature point data acquisition part, and the channel frequency; a corresponding person determination part which, after the search by the server (27) ends, determines whether or not there is a person corresponding to the feature point data; an entertainer name display part which, if it is determined by the corresponding person determination part that there is a corresponding person, displays an entertainer name on the screen; and a message display part which, if it is determined by the corresponding person determination part that there is no corresponding person, displays a message on the screen.

According to this configuration, when a person the user desires to search appears on the screen during reproduction, a still image is displayed so that the face of the person the user desired to search is selected from the still image. The feature point data acquisition part acquires the contour, eye position, and the like of the selected face to obtain the feature point data. The broadcasting date and time acquisition part acquires the recording start date and time from the recording medium, and acquires the broadcasting date and time of the video under reproduction based on the elapsed time of reproduction from the recording medium and the recording start date and time. Then, the transmission part feature point transmits to the server (27) the broadcasting date and time of the searched video and the channel frequency. Upon receiving an answer indicating search end from the server, the corresponding person determination part determines whether or not there is a person corresponding to the feature point. If there is a corresponding person, the entertainer name display part displays the entertainer name on the screen. If there is no corresponding person, the message display part displays on the screen, for example, a message "Search again at a later date".

In the program search support system configured as described above, the server (27) has: a memory (28) where a name and feature point data of a face of an entertainer acquired based on an entertainer directory, and where entertainer names are registered by time zone; a person search part which, upon a request provided from the terminal apparatus, searches a list of cast members corresponding to the broadcasting time for a person matching the feature point data; an all data person search part which, if there is no corresponding person matching the feature point data as a result of the search by the person search part, searches all data in the memory (28) for a person matching the feature point; an entertainer name returning part which, when there is a corresponding person matching the feature point data as a result of the search by the search part or the all data person search part, returns an entertainer name to the terminal apparatus (1); a message returning part which, when there is no corresponding person matching the feature point data as a result of the search by the all data person search part search, returns to the terminal apparatus (1) a message indicating that there is no corresponding person; a no corresponding person list registration part which, when there is no corresponding person matching the feature point data, registers into a no corresponding person list of the memory (28) the feature point data to which no person corresponds; and an entertainer name registration part which, when there is no corresponding person matching the feature point data, registers into the memory (28) an entertainer name investigated at a later date by using the broadcasting date and time, the channel frequency, and the feature point data of a face.

According to this configuration, the server (27) stores into the memory (28) the name and feature point data of the face of the entertainer. In addition, into the memory (28), entertainer names are registered by time zone of a program which an entertainer is in. Upon receiving from the terminal apparatus (1) the broadcasting time, the channel frequency, and the feature point data, the person search part searches the cast list of the broadcasting time for a person matching the feature point data. If there is a corresponding person, the entertainer name returning part transmits information of this person to the terminal apparatus.

If there is no corresponding person as a result of the search by the person search part, the all data person search part searches, regardless of broadcasting time, all data in the memory (28) for a person matching the feature point data. If there is a corresponding person, the entertainer name returning part transmits information of this person to the terminal apparatus (1).

If there is no corresponding person as a result of the search by the all data person search part, the message returning part transmits a message to the terminal apparatus (1). In addition, the no corresponding person list registration part registers into the memory (28) the feature point to which no person corresponds. The entertainer registered in the no corresponding person list is investigated at a later date by the management side or the like of the server, the entertainer name registration part registers the entertainer name into the memory (28) by using the broadcasting date and time, the channel frequency, and the feature point data of the face.

According to the configuration described above, while reproducing and viewing a video recorded in the terminal apparatus (1) on the user side, for example, simply pressing the search key of the remote controller (19) permits identifying who is the person currently displayed. As a result, by using the entertainer name displayed on the screen, a program that the entertainer is in can be searched so as to be used for programming recording or the like. Therefore, even when the name of a cast member (entertainer) of a program the user desires to search is forgot and thus cannot be remembered, the desired program can be searched.

### BRIEF DESCRIPTION OF THE DRAWINGS

Fig. 1 is block diagram showing the configuration of a program search support system according to an embodiment of the present invention;
Fig. 2 is a flowchart showing user side search processing of the program search support system according to the embodiment of the invention; and
Fig. 3 is a flowchart showing server side search processing of the program search support system according to the embodiment of the invention.

### DETAILED DESCRIPTION OF THE PREFERRED EMBODIMENTS

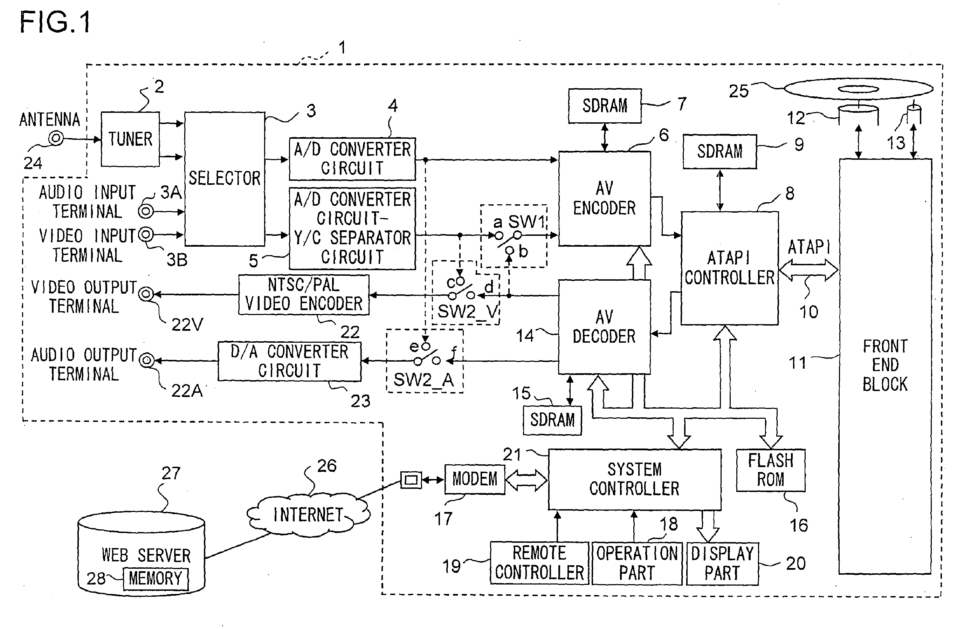

Hereinafter, the embodiment of the present invention will be described with reference to the accompanying drawings. FIG. 1 is block diagram showing the configuration of a program search support system according to one embodiment of the invention. In this embodiment, as a terminal apparatus used by the user, a DVD recorder is employed, and the DVD recorder is connected to a web server via a communication line composed of the Internet.

In FIG. 1, the DVD recorder 1 includes: a tuner 2, a selector 3, an A/D converter circuit 4, an A/D converter circuit-Y/C separator circuit 5, an AV encoder 6, an SDRAM 7, an ATAPI controller 8, an SDRAM 9, an ATAPI interface 10, a front end block 11, a spindle motor 12, an optical pickup 13, an AV decoder 14, an SDRAM 15, a flash ROM 16, a modem 17, an operation part 18, a remote controller 19, a display part 20, a system controller 21, an NTSC/PAL video encoder 22, and a D/A converter circuit 23.

Of television broadcasting signals inputted by an antenna 24, an analog video and audio signal of a desired broadcasting station is extracted by the tuner 2. The analog video and audio signal extracted by the tuner 2 is inputted into the selector 3. The selector 3 selects and outputs either one of the analog video and audio signal from the tuner 2 and an analog video and audio signal from a video signal input terminal 3B and an audio signal input terminal 3A.

The A/D converter circuit 4 converts into, a digital video and audio signal, the analog video and audio signal from the tuner 2 selected by the selector 3. The A/D converter circuit-Y/C separator circuit 5 converts the analog video and audio signal from the video signal input terminal 3B and the audio signal input terminal 3A selected by the selector 3 into a digital video signal, and inputs it into a contact a of a switch SW1. In addition, the A/D converter circuit-Y/C separator circuit 5 inputs the analog video signal from the video signal input terminal 3B as an AY/C separation video signal into a contact c of a switch SW2_V.

The AV encoder 6 encodes the digital video and audio signal from the A/ D converter circuit 4. The SDRAM 7 is a memory for temporarily storing data required during the encode processing performed by the AV encoder 6. The ATAPI controller 8 controls the ATAPI interface 10 and controls data transmission and reception to and from the front end block 11.

The SDRAM 9 is a memory for temporarily storing data required during the control performed by the ATAPI controller 8. The front end block 11 controls a spindle 12 for rotating an optical disc 25, the optical pickup 13, and the like. This permits video and audio data to be recorded onto the optical disc 25 and also permits video and audio data to be extracted from the optical disc 25 for reproduction.

The AV decoder 14 decodes the reproduced video and audio data from the front end block 11 inputted via the ATAPI interface 10 and the ATAPI controller 8. The SDRAM 15 is a memory for temporarily storing data required during the decode processing performed by the AV decoder 14. The system controller 21 controls the entire components of this DVD recorder 1, and performs corresponding control in response to an operation signal from the operation part 18 or the remote controller 19.

The flash ROM 16 stores programs and data required for operation of the system controller 21. The display part 20 displays operation contents from the operation part 18 and the remote controller 19, current operation condition, and the like. The modem 17 performs communication with a web server 27 via an Internet 26.

The NTSC/PAL video encoder 22 encodes an input signal into a NTSC-compatible or PAL-compatible video signal, and outputs it to a video output terminal 22V. When the switch SW2_V is connected to the contact c, the Y/C separation video signal from the A/D converter circuit-the Y/C separator circuit 5 is inputted into the NTSC/PAL video encoder 22 Y/C. Moreover, when the switch SW2_V is set at a contact d, a video signal from the AV decoder 14 is inputted into the NTSC/PAL video encoder 22.

The D/A converter circuit 23 inputs a digital audio signal, converts it into an analog audio signal, and outputs it to a audio output terminal 22A. When a switch SW2_A is set at a contact e, a digital audio signal from the A/D converter circuit 4 is inputted into the D/A converter circuit 23. When the switch SW2_A is set at a contact f, a digital audio signal from the AV decoder 14 is inputted into the D/A converter circuit 23.

As features of this embodiment, the system controller 21 of the DVD recorder 1 as a terminal apparatus is provided with: a program-related information recording part, a feature point data acquisition part, a broadcasting date and time acquisition part, a corresponding person determination part, an entertainer name display part, and a message display part.

The program-related information recording part records recording start time and a channel frequency onto the optical disc 25 when a program has been recorded. The feature point data acquisition part, in order to select the face of a person to be searched, acquires feature point data of the face of a person selected from a still image displayed on a display device (not shown).

The broadcasting date and time acquisition part acquires broadcasting date and time of a video under reproduction obtained based on elapsed time of reproduction and the recording start date and time. The transmission part transmits to the web server 27 the broadcasting date and time acquired by the broadcasting date and time acquisition part, the channel frequency, the feature point data. The corresponding person determination part terminates the searching from the web server 27 and determines whether or not there is a person corresponding to the feature point data.

The entertainer name display part displays an entertainer name on the screen of the display device when there is a person corresponding to the feature point data. The message display part displays on the screen of the display device a message directing to search again at a later date when there is no person corresponding to the feature point data.

On the other hand, the web server 27 is provided with: a memory 28, a person search part, an all data person search part, an entertainer name returning part, a message returning part, a list registration part, and an entertainer name registration part. In the memory 28, names and feature point data of faces of entertainers obtained based on an entertainer directory are registered. In addition, in order to improve the search efficiency, entertainer names of cast members are also registered in the memory 28 by time zone of a program.

The person search part, upon search request from the DVD recorder 1, searches a list of cast members corresponding to the broadcasting time for a person matching feature point data received from the DVD recorder 1. The all data person search part searches all data for a person matching the feature point data when there is no corresponding person matching the feature point data.

The entertainer name returning part returns an entertainer name to the DVD recorder 1 when there is a person matching the feature point data as a result of the search by the person search part or the all data person search part. The message returning part returns to the DVD recorder 1 a message indicating that there is no corresponding person when there is no corresponding person matching the feature point data as a result of the search by the all data person search part.

The list registration part, when there is no corresponding person matching the feature point data, registers into a no corresponding person list of the memory 28 the feature point data to which no person corresponds. The entertainer name registration part, for the feature point data to which no person corresponds, registers into the memory 28 an entertainer name investigated at later time by using the broadcasting date and time, the channel frequency, and the feature point data of the face.

In the management side of the web server 27, based on the entertainer directory, a name and feature point data of the face of an entertainer is inputted into the web server 27. In order to improve the search efficiency, information of a cast member is inputted into the web server 27 by time zone. If the person is not known at this point, this input operation is not required. Feature point data which has been requested by the user but no person corresponds to is stored into the no corresponding person list. Based on the no corresponding person list, the entertainer name is investigated at a later date by using the broadcasting time, the channel frequency, and the feature point data of the face and then inputted into the web server 27.

On the other hand, on the user side, when video and audio data of a TV program is recorded onto the optical disc 25 by the DVD recorder 1, recording start time and a channel frequency are saved onto the optical disc 25. When a person of interest is displayed on the screen of the display device during reproduction from the optical disc 25 by the DVD recorder 1, the user operates the search key of the remote controller 19, whereby the name of the cast member is displayed on the display device.

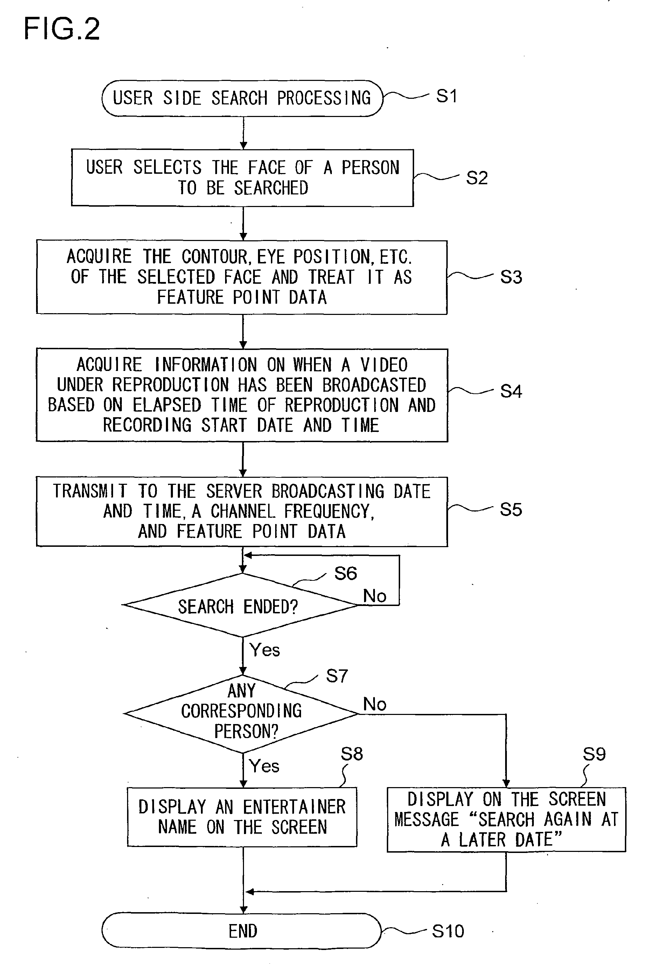

FIG. 2 is a flowchart showing user side search processing. The user side search processing will be described with reference to this flowchart and FIG. 1.

Now, the optical disc 25 has recording start time and a channel frequency recorded thereon by the program related information recording part of the system controller 21 when a TV program has been recorded by the DVD recorder 1. Moreover, the video output terminal 22V of the DVD recorder 1 is connected to a video input terminal of a television receiver, not shown. The audio output terminal 22A is connected to an audio input terminal of the same television receiver. At the time of reproduction from the optical disc 25, the switch SW2_V is set at the contact d, and the switch SW2_A is set at the contact f.

When the optical disc 25 is loaded in the DVD recorder 1, the system controller 21 drives the front end block 11 to read video and audio data recorded on the optical disc 25. The system controller 21 makes the front end block 11, the ATAPI interface 10, the ATAPI controller 8, the AV decoder 14, the NTSC/PAL video encoder 22 perform their respective processing described above and have a video signal outputted from the video output terminal 22V, whereby a video is displayed on a display device such as a television receiver or the like.

When a person the user desires to search appears on the display device, the user side search processing is retrieved by operating the remote controller 19 or otherwise (step S1). Consequently, a video under reproduction is paused whereby a still image is displayed on the display device. The user side search processing may also be retrieved by operating the remote controller 19 or otherwise after the video under reproduction is paused.

In step 2, the user encloses the face of the person to be searched in the still image with a selection frame, and operates a determine key of the remote controller 19 to select the face of the person. In step 3, the feature point data acquisition part of the system controller 21 acquires the contour, eye position, and the like of the face selected in step S2, whereby the feature point data acquisition part acquires feature point data of the selected face.

In step 4, the broadcasting date and time acquisition part of the system controller 21 acquires information on when the video under reproduction has been broadcasted based on the elapsed time of reproduction and the recording start date and time. In step 5, the transmission part of the system controller 21 transmits to the web server 27 the broadcasting date and time, the channel frequency, the feature point data of the searched video, whereby, as described later, the web server 27 performs search of the person.

In step 6, an answer indicating search end from the web server 27 is awaited. Upon receiving the answer indicating search end from the web server 27, the processing proceeds to step S7. In step 7, the corresponding person determination part of the system controller 21 determines whether or not there is a person corresponding to the feature point data.

If there is a person corresponding to the feature point data, in step S8, the entertainer name display part of the system controller 21 displays the entertainer name on the screen of the display device. If there is no person corresponding to the feature point data, the processing proceeds to step S9, where the message display part of the system controller 21 displays, for example, a message "Search again at a later date" on the screen of the display device. After the processing at steps S8 and S9, the user side search processing ends (step S10).

Upon the display of the entertainer name on the display device by the user side search processing, this entertainer name can be used for, for example, search for a program this entertainer is in so as to perform recording programming and the like.

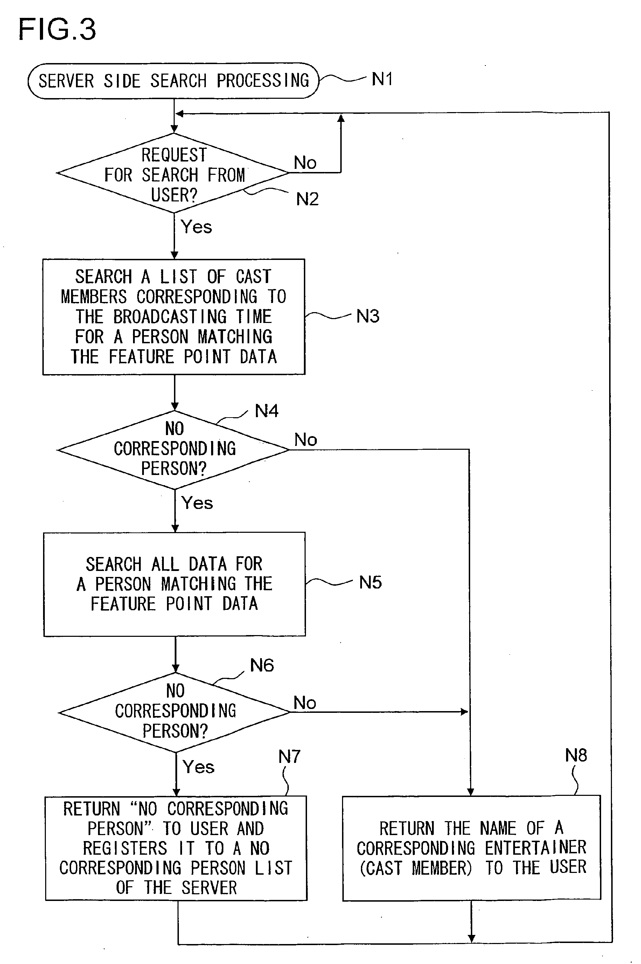

FIG. 3 is a flowchart showing server side search processing performed by the web server 27. The web server 27 starts the server side search processing when activated (step N1). In step N2, a request for entertainer name search, which is to be provided via the Internet 26 from the DVD recorder 1 on the user side, is awaited.

Upon receiving the request for entertainer name search transmitted from the DVD recorder 1 in step S5 of FIG. 2 described above, the processing proceeds to step N3, where the person search part of the web server 27 searches the memory 28 for a person, in the list of cast members corresponding to the broadcasting time, who matches the feature point data.

In step N4, it is judged whether or not there is a corresponding person matching the feature point data as a result of the search. If there is a corresponding person, the processing proceeds to step N8. If there is no corresponding person, the processing proceeds to step N5, and the all data person search part of the web server 27 searches all the data for a person matching the feature point data.

In step N6, it is judged whether or not there is a corresponding person matching the feature point searched in step N5. If there is a corresponding person, the processing proceeds to step N8 whereas the processing proceeds to step N7 if there is no corresponding person.

In step N7, the message returning part of the web server 27 returns to the DVD recorder 1 on the user side a message indicating that there is no corresponding person. The no corresponding person list registration part registers into the memory 28 of the web server 27 the feature point data to which no person corresponds.

For a person corresponding to no feature point data, investigation is performed by the management side of the web server 27 at a later date. An entertainer name identified by the investigation is registered into the memory 28 by the entertainer name registration part of the web server 27 by using the broadcasting date and time, the channel frequency, and the feature point data of the face.

If it is judged in step N4 or step N6 that there is a corresponding person matching the feature point data, the processing proceeds to step N8, where the entertainer name returning part of the web server 27 returns the entertainer (cast member) name to the DVD recorder 1 on the user side.

According to this embodiment, during reproduction from and viewing on the optical disc 25 on which recording has been performed by the DVD recorder 1 on the user side, for example, simply pressing the search key of the remote controller 19 permits identifying who is the person currently displayed. As a result, by using the entertainer name displayed on the display device, a program that the entertainer is in can be searched so as to be used for programming recording or the like. Therefore, even when the name of a cast member (entertainer) of a program the user desires to search cannot be remembered, the desired program can be searched.

This embodiment has been described, referring to the case where a DVD recorder is used as a terminal apparatus on the user side, although not limited thereto. For example, an optical disc recorder capable of recording and reproducing video and audio data on an optical disc other than a DVD, a hard disc recorder capable of recording and reproducing video and audio data on an HDD, and other recording and reproduction apparatuses may be used.

## Claims

1. A program search support system comprising:
a terminal apparatus (1) capable of recording and reproducing information; and a server (27) connected to the terminal apparatus (1) via a communication line (26) and capable of providing program information,
wherein, by providing, from the terminal apparatus (1) to the server (27), a request for search for program information, the program information is acquired by the terminal apparatus (1),
wherein the terminal apparatus (1) transmits to the server (27) feature point data of a person selected from a still image displayed on a screen, broadcasting date and time of a video under reproduction, and a channel frequency of the video under reproduction,
wherein the server (27) searches for a person based on information received from the terminal apparatus (1), and
wherein the terminal apparatus (1) displays an entertainer name on the screen if there is a corresponding person as a result of the search by the server (27).

2. The program search support system of claim 1,
wherein the terminal apparatus (1) has:
a program-related information recording part which, when a program has been recorded, records recording start time and a channel frequency onto a recording medium (25);
a feature point data acquisition part which acquires feature point data of a face of a person selected from a still image displayed on a screen;
a broadcasting date and time acquisition part which acquires broadcasting date and time of a video under reproduction based on elapsed time of reproduction and the recording start date and time;
a transmission part which transmits to the server (27) the broadcasting date and time acquired by the broadcasting date and time acquisition part, the feature point data obtained by the feature point data acquisition part, and the channel frequency;
a corresponding person determination part which, after the search by the server (27) ends, determines whether or not there is a person corresponding to the feature point data;
an entertainer name display part which, if it is determined by the corresponding person determination part that there is a corresponding person, displays an entertainer name on the screen; and
a message display part which, if it is determined by the corresponding person determination part that there is no corresponding person, displays a message on the screen.

3. The program search support system of claim 2,
wherein the server (27) has:
a memory (28) in which names and feature point data of faces of entertainers acquired based on an entertainer directory are registered, the entertainer names being registered by time zone;
a person search part which, upon the request provided from the terminal apparatus (1), searches a list of cast members corresponding to the broadcasting time for a person matching the feature point data;
an all data person search part which, if there is no corresponding person matching the feature point data as a result of the search by the person search part, searches all data in the memory (28) for a person matching the feature point;
an entertainer name returning part which, if there is a corresponding person matching the feature point data as a result of the search by the search part or the all data person search part, returns an entertainer name to the terminal apparatus (1);
a message returning part which, if there is no corresponding person matching the feature point data as a result of the search by the all data person search part, returns to the terminal apparatus (1) a message indicating that there is no corresponding person;
a no corresponding person list registration part which, if there is no corresponding person matching the feature point data, registers into a no corresponding person list of the memory (28) the feature point data to which no person corresponds; and
an entertainer name registration part which, if there is no corresponding person matching the feature point data, registers into the memory (28) an entertainer name investigated at a later date by using the broadcasting date and time, the channel frequency, and the feature point data of a face.
